# EUROPEAN PATENT SPECIFICATION

(11) **EP 3 504 495 B1**
(45) Date of publication and mention of the grant of the patent: **14.04.2021**
(21) Application number: 17761565.5
(22) Date of filing: 17.08.2017
(51) Int. Cl.: F26B 3/06, F26B 23/00, C05F 17/50

(54) **METHOD AND DEVICE FOR DRYING OF WASTE**
VERFAHREN UND VORRICHTUNG ZUM TROCKNEN VON MÜLL
MÉTHODE ET DISPOSITIF POUR LE SÉCHAGE DE DÉCHETS

(30) Priority: 24.08.2016 AT 3932016
(43) Date of publication of application: 03.07.2019
(73) Proprietor: Holcim Technology Ltd, 8645 Jona (CH)
(72) Inventor: MAIER, Beat, CH-5113 Holderbank (CH); ROUSSET, Norbert, F-38291 Saint-Quentin-Fallavier Cedex (FR)
(74) Representative: Keschmann, Marc
(86) International application number: PCT/IB2017/000980
(87) International publication number: WO 2018/037273

(56) References cited:
- EP-A1- 0 623 572
- EP-A1- 1 051 372
- US-A- 6 101 739

## Description

The invention concerns a method for an at least two-stage drying of waste, in particular household waste, in which the waste is pre-dried in a first stage and finally dried in a second stage, wherein the drying comprises an aerobic rotting in which the biologically more easily decomposed organic components of the waste are degraded by adding air and microbially under heat generation.

The invention further concerns a device for carrying out such a drying method.

There is an effort to make alternative fuels, ie fuels with a lower fuel value as compared with high-grade natural gas, coal or oil, usable in, for example, the manufacture of cement clinker, wherein such alternative fuels are frequently available in the form of waste. Particularly large quantities of waste are available in the form of household waste. Household waste means a mixture of waste which comes from households and comparable premises. With regard to the applicable waste separation regulations, household waste is often labelled as residual household waste. The material composition of household waste differs regionally and seasonally. Household waste mostly contains varying proportions of plastic, fine waste, paper/pulp, nappies, textiles, glass, metal, composite materials and vegetable matter. From the point of view of fuel technology, household waste may be divided into the components: water, inert material, fossil fuel matter and organic fuel matter, wherein it is further to be noted that household waste features a high proportion of organic substances, ie approximately 30 to 60% (organic portion including water).
Up to now, because of the considerable moisture content, the utilisation potential for such waste materials in the cement industry has been limited if the waste materials are introduced directly into the burner systems, which because of the water content leads to a higher heat requirement for evaporating the water in the clinker manufacturing process. In addition, the considerable quantities of water introduced after evaporating the water results in an unfavourably high volume of overall processing emissions, which in turn leads to greater emissions management expenditure.

Accordingly, in order to be able to use household waste as an alternative fuel in the cement industry, a pre-treatment including drying is necessary. Typically, the drying is carried out using high-grade fuels such as natural gas or diesel, which is however disadvantageous from an economic perspective. An alternative to this is to subject the waste to biological drying.

Biological drying is generally understood to mean a process in which household waste is aerated, thus air flows through it and it is aerobically rotted. In this process the household waste is placed into a reactor and the biologically more easily decomposed organic components of the household waste are microbially degraded. The decomposition of the organic components using microorganisms is an exothermic reaction which causes a rise in temperature within the waste. In this way however, only a small proportion of the organic components of the waste is degraded, whereby its energy is, as far as possible, retained and the household waste remains useable as a high-energy fuel substitute. The biological heat arising in the aerobic rotting causes a drying of the household waste. By means of the energy released in this process the air flowing through the household waste absorbs heat and moisture and thus effects a reduction in the moisture content within the household waste. Following the biological drying the household waste can be used, in fuel technology terms, as a high-grade and CO₂-neutral fuel substitute in the cement manufacturing process.

Electricity to power the aeration system is the only external energy source required for biological drying which is thus much more energy efficient and cheaper than the drying methods mentioned above which require fossil energy sources.

In contrast to other composting processes, biological drying seeks to turn household waste into a useable, qualitatively high-grade fuel substitute in the shortest possible dwell period in the reactor. In doing so, firstly the energy content in the household waste is raised by removing as much water as possible, secondly a large proportion of the heating value of the organic materials is retained within the waste, since there is only minimal organic degrading.

Biological drying can be carried out in one, as well as two or a number of stages. In the context of the current invention a two or multi-stage process is proposed, in which the damp waste is subjected to a pre-drying process, and the pre-dried waste is subjected to a final drying process.

EP1051372 A1, EP0623572 A1 and US6101739 A disclose methods for two-stage drying according to the state of the art.

A disadvantage of the two-stage drying is that it requires two rotting chambers or rotting reactors each with its own aeration system and its own exhaust air treatment system, so that the equipment outlay is significantly raised. Further, compared with one-stage drying, the heat loss with two rotting chambers is greater.

It is therefore a goal of the invention, to make available a device with which the afore-mentioned disadvantages may be overcome without high technical installation costs.

In order to achieve this goal, the invention provides a method according to claim 1, in which heaped-up damp waste in a first sub-area of a closed building is subjected to the first drying stage and heaped-up pre-dried waste in a second sub-area of a closed building is subjected to the second drying phase, wherein the second drying stage comprises the aeration of the pre-dried waste by feeding, in particular blowing in, air from outside the building and the first drying stage comprises the aeration of the damp waste by extracting the air coming out of the second drying stage through the damp waste and out of the building.

The invention thus provides firstly that the at least two drying stages take place in the same building, wherein separate, closed rotting chambers or the like are not necessary, but instead the waste is simply deposited in at least one heap or at least one skip in a first or second sub-area of the building. The equipment outlay is therefore significantly reduced. If the first and the second sub-area of the building are arranged adjacently or in a common space, the transportation of the waste from the first sub-area to the second sub-area becomes easier. The transportation of pre-dried waste from the first sub-area to the second sub-area preferably comprises the picking up of the pre-dried waste (for example with an excavator shovel), the transportation of that waste and the depositing of the waste in the second sub-area. Since, following the first drying stage, the damp waste is deposited in the second sub-area as pre-dried waste, a restacking, homogenising and loosening of the waste is achieved which facilitates the drying process. In particular, the breaking up of dead zones and settlements which would have a negative influence on the permeability of the air is achieved. Thus, as a whole, the drying time, the dimensions of the drying and the energy costs are reduced.

The first and the second sub-areas of the building each occupy a partial area of the floor space of the building and are preferably arranged at the same level. This facilitates the transportation of pre-dried waste to the final drying.

Furthermore, the invention provides that the same air is used for the aeration of the waste in the first and second drying stages. The air in this process is fed through the two drying stages in a counter-current to the progression of the drying, ie it is used first for the final drying and then for the pre-drying. Thus fresh air from outside the building is first directed, in particular forced, through the already pre-dried waste, in order to carry out the final drying, whereby the air is heated and humidified. The heated air is subsequently used to aerate the damp waste in the first sub-area of the building, and then sucked out of the building. Because pre-tempered air is used, the drying process can be carried out in a shorter time and using the same or less energy. The transfer of the air coming out of the pre-drying to the final drying is carried out taking into account the arrangement of the two drying stages in the same building, in particular in one common space or volume of the building in a simple way, in that the air exiting though the waste in the second drying stage is extracted from the building through the damp waste.

The method according to the invention, only requires a single exhaust air treatment system, so that compared with conventional methods the equipment outlay is reduced. Further, blowers and conduits for the two drying stages do not necessarily have to be corrosion-resistant, because in contrast to exhaust air, fresh air is not corrosive.

According to the invention, the feeding, in particular blowing, of the air into the pre-dried waste is done via a perforated or slitted floor carrying the pre-dried waste. The perforations or slits may have a conical cross-section area which gets bigger towards the bottom, in order to prevent blockage. The air is preferably extracted through the damp waste via a perforated or slitted floor carrying the damp waste. The aeration system thus only requires a perforated or slitted floor with a plenum (raised floor) underneath in the second sub-area of the building with a blower, in particular a pressure blower, for feeding surrounding air through the pre-dried waste, and a perforated or slitted floor in the first sub-area of the building with a extractor fan for sucking the air through the damp waste and blowing it outside.

The first and the second sub-area of the building are preferably directly connected to one another, so that it is unnecessary to have separate conduits for the transportation of the air moving out of the final drying to the pre-drying.

Alternatively, the first and second sub-area of the building may be connected to each other by an air duct. This is particularly advantageous where the air used for aeration is subject to a dehumidification or condensation after flowing through the second drying stage.

A further preferred method provides that fresh air is sucked in through a fresh air flap in the building. The sucked in airflow is preferably adjustable, so that the quantity of air sucked in over a period of time can be controlled in accordance with measured values. Fresh air is used together with the air coming out of the second drying stage to aerate the damp waste in the first drying stage. By adjusting the quantity of fresh air, the mixture ratio of fresh air to heated air from the second drying stage can be adjusted. The mixing in of fresh air can be used, for example, to reduce the moisture content of the air coming out of the second drying stage. The sucked in fresh air is preferably controlled, in that more air is extracted through the perforated or slitted floor of the first drying stage than is blown in through the floor of the second drying stage.

A parallel, uninterrupted operation of the first and second drying stages is preferably made possible by the fact that the first sub-area of the building is divided into a multiplicity of sections which are filled one after the other with damp waste, so that when the process is underway the sections are filled with waste of differing degrees of dryness. The individual sections of the first sub-area can preferably be filled with damp waste at chronological intervals of 1 day after another. The second sub-area of the building is preferably also divided into a multiplicity of sections which are filled one after the other with pre-dried waste from the first drying stage so that when the process is underway the sections are filled with waste of differing degrees of dryness. The individual sections of the second sub-area may preferably be filled with damp waste at chronological intervals of 1 day after another. This makes possible a step-by-step reallocation of the pre-dried waste from the section with the highest degree of pre-drying, or the longest dwell period, to the final drying stage.

An analogous procedure may be carried out in the final drying stage, wherein a preferred procedure in this context provides that the section in the second drying stage with the highest degree of dryness is emptied and the removed, finally dried waste is taken away.

Further, it is preferably provided that the section of the first drying stage with the highest degree of dryness is emptied, the removed pre-dried waste is deposited in an empty section of the second drying stage and new damp waste is heaped into the emptied section. Thus a step-by-step supply of new damp waste is achieved. The division of the first and/or second sub-areas of the building into sections thus facilitates a supply of new damp waste and a reallocation of pre-dried waste to the final drying without having to interrupt the drying process in relation to the sections which are not involved in the re-supply or reallocation process.

If, as in a preferred embodiment, the sections are formed as elongated and are adjacent to one another on their long sides, in particular arranged in a row, the re-supply or re-allocation of the waste to the individual sections can take place at the narrow end of the section so that easy access at the same time as a space saving arrangement are ensured. Here, the space saving arrangement means that the sections are directly adjacent to one another on their long sides, for example by placing limiting elements such as partition walls in between. In the individual sections the waste can be heaped up to a height of 3m, preferably to a height of 4m, so that large quantities of waste can be dried.

It may particularly preferably be provided that the first drying stage is carried out over a longer period than the second drying stage. Accordingly, it may preferably be provided that the first sub-area of the building has a higher number of sections than the second sub-area of the building. This ensures a process in which the waste in the individual sections of the pre-drying stage and the final drying stage is held for roughly the same length of time and no sections in the pre-drying stage and the final drying stage remain empty. If, for example, the sections are filled one after the other at 1-day intervals and, after all of the sections are filled, the section with the highest degree of dryness is emptied, after which that section is filled with new waste, in a layout with 10 sections the waste has a dwell period of 10 days.

It is preferably provided, with respect to the dwell period, that the damp waste contained in one section is subjected to the first drying stage over a period of 8 to 12, in particular 10, days. In the process, the pre-dried waste contained in a section may be subjected to the second drying stage preferably for a period of 4 to 8, in particular 5, days.

An advantageous separation of the drying process between the pre-drying stage and the final drying stage is achieved according to a preferred method in that in the first drying stage the damp waste is dried until the water content is reduced to 25 to 35%, and in the second drying stage the pre-dried waste is dried until the water content is reduced to 15 to 25%.

The air extracted from the building is preferably subjected to an air purification process, in particular a process that uses a bio-filter. Because the air has, in accordance with the invention, passed through both drying stages, it is ensured that the air has a sufficient moisture content to allow safe operation of the bio-filter, wherein in particular a drying out of the filter is avoided. Further, given the high moisture content of the air being extracted from the building, there is no need for the placing of a wet scrubber upstream of the filter.

According to a further aspect of the invention, a device for carrying out the drying process according to the invention is provided, comprising a building with a perforated or slitted floor in a first sub-area of the building and a perforated or slitted floor in a second sub-area of the building; a blower connected to the perforated or slitted floor of the second sub-area, in particular a pressure blower for feeding, in particular blowing in, air from the area around the building via the perforated or slitted floor onto the waste arranged on the floor; and an extractor fan connected to the perforated or slitted floor of the first sub-area for extracting air from the waste arranged on the floor via the perforated or slitted floor out into the area around the building.

The extractor fan is preferably connected with an air purification device arranged outside the building.

The invention is explained in more detail by means of a schematically depicted embodiment in the drawing below.

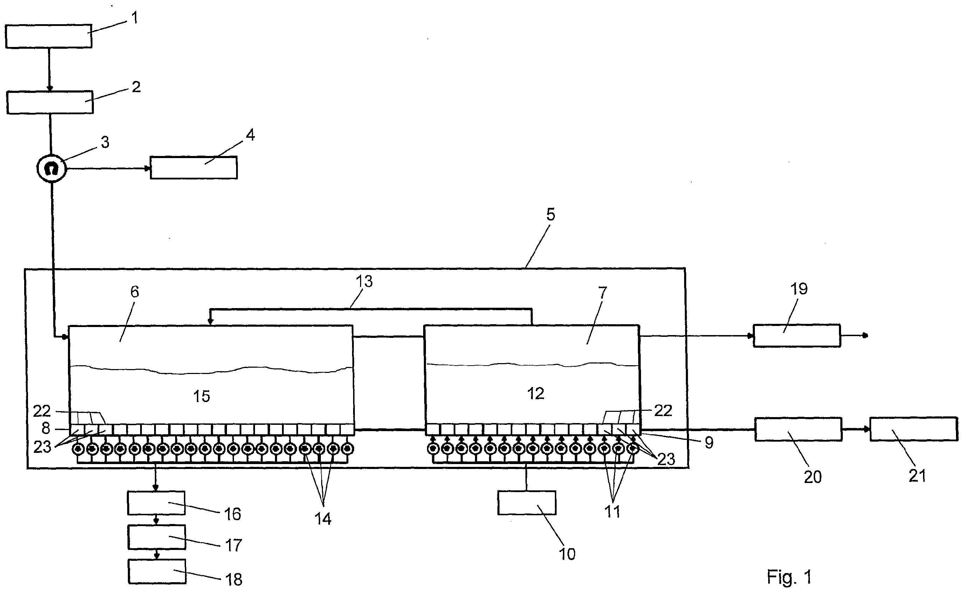

Fig. 1 shows a flow diagram of a waste treatment process according to the invention including a drying process along with the building provided for the drying process. Moist, or damp waste 1 which is to be treated is fed, where necessary after a radioactivity check, into a crushing device 2 in which the waste is reduced to a size of, for example, <200mm. The crushed waste is subjected to a magnetic separation 3 of metallic components, wherein metallic components 4 are separated out. The crushed damp waste is brought into the building 5 for drying and is dried in two stages. In a first sub-area 6 of the building a pre-drying takes place, and in a second sub-area 7 of the building a final drying takes place. In each of the first and second sub-areas 6, 7 a perforated floor 8 or 9 is provided, through which the feeding in and extraction of drying air takes place. The feeding in of ambient air 10 is performed with the aid of a number of pressure blowers 11, which suck in ambient air 10 from outside the building 5 and blow it via the perforated floor 9 into the pre-dried waste 12 heaped onto the floor 9. The aeration may be designed so that it is possible to both blow and extract, but in general the air will be blown in. In this way the pre-dried waste 12 is aerated and the air exiting the waste 12 moves, as indicated by 13, from the second sub-area 7 of the building 5 into the first sub-area 6. In the first sub-area 6 the air is drawn through the damp waste 15 by the activity of the multiplicity of extractor fans 14 and exits the building 5 via the perforated floor 8 as humid air 16. The humid air 16 is freed from suspended particles 18 in a bio-filter 17.

The dried waste 19 is transported out of the building 5 and supplied for further use, for example as fuel for cement manufacture.

The seepage water 20 accumulating in the perforated floors 8 and 9 is also removed and may be sent for treatment 21.

The first sub-area 6 and the second sub-area 7 are each divided into a multiplicity of sections 22. The sections 22 do not need to be structurally separate. The perforated floor 8 or 9 has a number of chambers 23, wherein each section 22 is allocated an individual chamber 23, so that the aeration in each section 22 can be individually adjusted.

## Claims

1. A method for an at least two-stage drying of waste, in particular household waste, in which the waste is pre-dried in a first stage and finally dried in a second stage, wherein the drying comprises an aerobic rotting in which the biologically more easily decomposed organic components of the waste are degraded by adding air and microbially under heat generation, wherein in a first sub-area (6) of a closed building (5), heaped-up damp waste (1) is arranged on a perforated or slitted floor (8) and is subjected to the first drying stage and in a second sub-area (7) of the closed building, heaped-up pre-dried waste (12) is subjected tc the second drying stage, wherein the second drying stage comprises the aeration of the pre-dried waste (12) by feeding, in particular blowing in, air from outside the building and the first drying stage comprises the aeration of the damp waste by sucking the air coming out of the second drying stage through the damp waste and out of the building, **characterised in that** the air is sucked through the damp waste via the perforated or slitted floor (8) of the first sub-area (6) carrying the damp waste by means of a suction fan (14) connected to the perforated or slitted floor (8) of the first sub-area (6) and arranged for sucking air out of the damp waste via the perforated or slitted floor (8) of the first sub-area (6) into the area surrounding the building.

2. The method according to claim 1, **characterised in that** the air is fed into the pre-dried waste (12) via a perforated or slitted floor (9) carrying the pre-dried waste.

3. The method according to claim 1 or 2, **characterised in that** the air is sucked through the damp waste via the perforated or slitted floor (8) carrying the damp waste.

4. The method according to claim 1, 2 or 3, **characterised in that** the first (6) and the second (7) sub-areas of the building are directly connected to each other.

5. The method according to one of claims 1 to 4, **characterised in that** after the first drying stage, the damp waste is deposited in the second sub-area (7) of the building as pre-dried waste (12).

6. The method according to one of claims 1 to 5, **characterised in that** the first sub-area (6) of the building is divided into a multiplicity of sections which are filled, one after the other, with damp waste so that when the process is under way the sections are filled with waste at differing degrees of dryness.

7. The method according to one of claims 1 to 6, **characterised in that** the second sub-area (7) of the building is divided into a multiplicity of sections which are filled, one after the other, with pre-dried waste from the first drying stage, so that when the process is under way the sections are filled with waste at differing degrees of dryness.

8. The method according to claim 7, **characterised in that** the section of the second drying stage with the highest degree of dryness is emptied and the extracted, finally dried waste is taken away.

9. The method according to one of claims 6 to 8, **characterised in that** the section of the first drying stage with the highest degree of dryness is emptied, the extracted pre-dried waste is deposited in an empty section of the second drying stage, and new damp waste is deposited in the emptied section.

10. The method according to one of claims 6 to 9, **characterised in that** the sections are formed as elongated and are adjacent to one another on their long sides, in particular they are arranged in a row.

11. The method according to one of claims 1 to 10, **characterised in that** the first drying stage is carried out over a longer period of time than the second drying stage.

12. The method according to one of claims 6 to 11, **characterised in that** the first drying sub-area (6) of the building has a higher number of sections than the second sub-area (7) of the building.

13. The method according to one of claims 6 to 12, **characterised in that** the damp waste contained in one section is subjected to the first drying stage over a period of 8 to 12, in particular 10 days.

14. The method according to one of claims 7 to 13, **characterised in that** the pre-dried waste contained in one section is subjected to the second drying stage over a period of 4 to 8, in particular 5 days.

15. The method according to one of claims 1 to 14, **characterised in that** in the first drying stage the damp waste is dried until the water content is reduced to 25 to 35%.

16. The method according to one of claims 1 to 15, **characterised in that** in the second drying stage the pre-dried waste is dried until the water content is reduced to 15 to 25%.

17. The method according to one of claims 1 to 16, **characterised in that** the air extracted from the building (5) is subjected to a purification using a bio filter (17).

## Patentansprüche

1. Verfahren zur wenigstens zweistufigen Trocknung von Müll, insbesondere Hausmüll, bei dem der Müll in einer ersten Stufe vorgetrocknet und in einer zweiten Stufe endgetrocknet wird, wobei die Trocknung eine aerobe Verrottung umfasst, bei welcher die biologisch leichter zersetzbaren organischen Anteile des Mülls unter Zufuhr von Luft und unter Wärmeentwicklung mikrobiell abgebaut werden, wobei in einem ersten Teilbereich (6) eines geschlossenen Gebäudes (5) aufgeschütteter feuchter Müll (1) auf einem gelochten oder geschlitzten Boden (8) angeordnet ist und der ersten Trocknungsstufe unterworfen wird und in einem zweiten Teilbereich (7) des geschlossenen Gebäudes aufgeschütteter vorgetrockneter Müll (12) der zweiten Trocknungsstufe unterworfen wird, wobei die zweite Trocknungsstufe das Durchlüften des vorgetrockneten Mülls (12) durch Einleiten, insbesondere Einblasen von Luft von außerhalb des Gebäudes umfasst und die erste Trocknungsstufe das Durchlüften des feuchten Mülls (1) durch Absaugen der aus der zweiten Trocknungsstufe kommenden Luft durch den feuchten Müll (1) hindurch aus dem Gebäude heraus umfasst, **dadurch gekennzeichnet, dass** die Luft über den gelochten oder geschlitzten Boden (8) des ersten Teilbereichs (6), der den feuchten Müll (1) trägt, mittels eines Sauggebläses (14), das mit dem gelochten oder geschlitzten Boden des ersten Teilbereichs (6) verbunden ist und angeordnet ist, um Luft aus dem feuchten Müll in den das Gebäude umgebenden Bereich zu saugen, durch den feuchten Müll gesaugt wird.

2. Verfahren nach Anspruch 1, **dadurch gekennzeichnet, dass** das Einleiten der Luft in den vorgetrockneten Müll (12) über einen gelochten oder geschlitzten, den vorgetrockneten Müll tragenden Boden (9) erfolgt.

3. Verfahren nach Anspruch 1 oder 2, **dadurch gekennzeichnet, dass** das Absaugen der Luft durch den feuchten Müll hindurch über den gelochten oder geschlitzten, den feuchten Müll tragenden Boden (8) erfolgt.

4. Verfahren nach Anspruch 1, 2 oder 3, **dadurch gekennzeichnet, dass** der erste (6) und der zweite (7) Teilbereich des Gebäudes in offener Verbindung miteinander stehen.

5. Verfahren nach einem der Ansprüche 1 bis 4, **dadurch gekennzeichnet, dass** der feuchte Müll nach der ersten Trocknungsstufe als vorgetrockneter Müll (12) in dem zweiten Teilbereich (7) des geschlossenen Gebäudes aufgeschüttet wird.

6. Verfahren nach einem der Ansprüche 1 bis 5, **dadurch gekennzeichnet, dass** der erste Teilbereich (6) des Gebäudes in eine Vielzahl von Abschnitten unterteilt ist, die nacheinander mit feuchtem Müll gefüllt werden, sodass die Abschnitte bei laufendem Verfahren mit Müll unterschiedlichen Trocknungsgrades gefüllt sind.

7. Verfahren nach einem der Ansprüche 1 bis 6, **dadurch gekennzeichnet, dass** der zweite Teilbereich (7) des Gebäudes in eine Vielzahl von Abschnitten unterteilt ist, die nacheinander mit vorgetrocknetem Müll aus der ersten Trocknungsstufe gefüllt werden, sodass die Abschnitte bei laufendem Verfahren mit Müll unterschiedlichen Trocknungsgrades gefüllt sind.

8. Verfahren nach Anspruch 7, **dadurch gekennzeichnet, dass** der den höchsten Trocknungsgrad aufweisende Abschnitt der zweiten Trocknungsstufe entleert und der entnommene, endgetrocknete Müll abtransportiert wird.

9. Verfahren nach einem der Ansprüche 6 bis 8, **dadurch gekennzeichnet, dass** der den höchsten Trocknungsgrad aufweisende Abschnitt der ersten Trocknungsstufe entleert wird, der entnommene, vorgetrocknete Müll in einem leeren Abschnitt der zweiten Trocknungsstufe aufgeschüttet wird und neuer feuchter Müll in dem entleerten Abschnitt aufgeschüttet wird.

10. Verfahren nach einem der Ansprüche 6 bis 9, **dadurch gekennzeichnet, dass** die Abschnitte länglich ausgebildet sind und mit ihren Längsseiten aneinandergrenzen, insbesondere in einer Reihe angeordnet sind.

11. Verfahren nach einem der Ansprüche 1 bis 10, **dadurch gekennzeichnet, dass** die erste Trocknungsstufe über einen längeren Zeitraum durchgeführt wird als die zweite Trocknungsstufe.

12. Verfahren nach einem der Ansprüche 6 bis 11, **dadurch gekennzeichnet, dass** der erste Teilbereich (6) des Gebäudes eine höhere Anzahl an Abschnitten aufweist als der zweite Teilbereich (7) des Gebäudes.

13. Verfahren nach einem der Ansprüche 6 bis 12, **dadurch gekennzeichnet, dass** der in einem Abschnitt aufgenommene feuchte Müll über einen Zeitraum von 8-12, insbesondere 10 Tagen der ersten Trocknungsstufe unterworfen wird.

14. Verfahren nach einem der Ansprüche 7 bis 13, **dadurch gekennzeichnet, dass** der in einem Abschnitt aufgenommene vorgetrocknete Müll über einen Zeitraum von 4-8, insbesondere 5 Tagen der zweiten Trocknungsstufe unterworfen wird.

15. Verfahren nach einem der Ansprüche 1 bis 14, **dadurch gekennzeichnet, dass** der feuchte Müll in der ersten Trocknungsstufe bis zur Reduktion des Wassergehalts auf 25-35% getrocknet wird.

16. Verfahren nach einem der Ansprüche 1 bis 15, **dadurch gekennzeichnet, dass** der vorgetrocknete Müll in der zweiten Trocknungsstufe bis zur Reduktion des Wassergehalts auf 15-25% getrocknet wird.

17. Verfahren nach einem der Ansprüche 1 bis 16, **dadurch gekennzeichnet, dass** die aus dem Gebäude (5) abgesaugte Luft einer Luftreinigung unter Verwendung eines Bio-Filters (17), unterworfen wird.

## Revendications

1. Procédé de séchage en au moins deux étapes de déchets, en particulier des déchets ménagers, dans lequel les déchets sont préséchés dans une première étape et finalement séchés dans une seconde étape,
dans lequel le séchage comprend un pourrissement aérobie dans lequel les composants organiques plus facilement décomposés par voie biologique des déchets sont dégradés par ajout d'air et par production de chaleur microbienne, dans lequel dans une première zone secondaire (6) d'un bâtiment fermé (5), des déchets humides entassés (1) sont disposés sur un plancher perforé ou fendu (8) et sont soumis à la première étape de séchage et, dans une seconde zone secondaire (7) du bâtiment fermé, des déchets préséchés entassés (12) sont soumis à la seconde étape de séchage, dans lequel la seconde étape de séchage comprend l'aération des déchets préséchés (12) par alimentation,
en particulier, soufflage d'air depuis l'extérieur du bâtiment et la première étape de séchage comprend l'aération des déchets humides en aspirant l'air sortant de la seconde étape de séchage à travers les déchets humides et à l'extérieur du bâtiment,
**caractérisé en ce que**
l'air est aspiré à travers les déchets humides par le plancher perforé ou fendu (8) de la première zone secondaire (6) portant les déchets humides au moyen d'un ventilateur d'aspiration (14) relié au plancher perforé ou fendu (8) de la première zone secondaire (6) et disposé de manière à aspirer l'air des déchets humides par le plancher perforé ou fendu (8) de la première zone secondaire (6) dans la zone entourant le bâtiment.

2. Procédé selon la revendication 1, **caractérisé en ce que** l'air est introduit dans les déchets préséchés (12) par un plancher perforé ou fendu (9) portant les déchets préséchés.

3. Procédé selon la revendication 1 ou 2, **caractérisé en ce que** l'air est aspiré à travers les déchets humides par le plancher perforé ou fendu (8) portant les déchets humides.

4. Procédé selon la revendication 1, 2 ou 3, **caractérisée en ce que** la première (6) et la seconde (7) zone secondaire du bâtiment sont directement reliées entre elles.

5. Procédé selon l'une des revendications 1 à 4,
**caractérisé en ce qu'**après la première étape de séchage, les déchets humides sont déposés dans la seconde zone secondaire (7) du bâtiment en tant que déchets préséchés (12).

6. Procédé selon l'une des revendications 1 à 5,
**caractérisé en ce que** la première zone secondaire (6) du bâtiment est divisée en une multiplicité de sections qui sont remplies, l'une après l'autre, de déchets humides de sorte que, lorsque le processus est en cours, les sections sont remplies de déchets à différents degrés de sécheresse.

7. Procédé selon l'une des revendications 1 à 6,
**caractérisé en ce que** la seconde zone secondaire (7) du bâtiment est divisée en une multiplicité de sections qui sont remplies, l'une après l'autre, de déchets préséchés provenant de la première étape de séchage, de sorte que lorsque le processus est en cours, les sections sont remplies de déchets à différents degrés de sécheresse.

8. Procédé selon la revendication 7, **caractérisé en ce que** la section de la seconde étape de séchage ayant le degré de sécheresse le plus élevé est vidée et les déchets extraits, finalement séchés, sont enlevés.

9. Procédé selon l'une des revendications 6 à 8,
**caractérisé en ce que** la section de la première étape de séchage ayant le degré de sécheresse le plus élevé est vidée, les déchets préséchés extraits sont déposés dans une section vide de la seconde étape de séchage, et de nouveaux déchets humides sont déposés dans la section vidée.

10. Procédé selon l'une des revendications 6 à 9,
**caractérisé en ce que** les sections sont formées comme des sections allongées et sont adjacentes les unes aux autres sur leurs longs côtés, en particulier elles sont disposées en ligne.

11. Procédé selon l'une des revendications 1 à 10,
**caractérisé en ce que** la première étape de séchage est réalisée sur une période plus longue que la seconde étape de séchage.

12. Procédé selon l'une des revendications 6 à 11,
**caractérisé en ce que** la première zone secondaire de séchage (6) du bâtiment a un nombre de sections plus élevé que la seconde zone secondaire (7) du bâtiment.

13. Procédé selon l'une des revendications 6 à 12,
**caractérisé en ce que** les déchets humides contenus dans une section sont soumis à la première étape de séchage sur une période de 8 à 12, en particulier 10 jours.

14. Procédé selon l'une des revendications 7 à 13,
**caractérisé en ce que** les déchets préséchés contenus dans une section sont soumis à la seconde étape de séchage sur une période de 4 à 8, notamment 5 jours.

15. Procédé selon l'une des revendications 1 à 14,
**caractérisé en ce que** dans la première étape de séchage, les déchets humides sont séchés jusqu'à ce que la teneur en eau soit réduite à 25 à 35%.

16. Procédé selon l'une des revendications 1 à 15,
**caractérisé en ce que** dans la seconde étape de séchage, les déchets préséchés sont séchés jusqu'à ce que la teneur en eau soit réduite à 15 à 25%.

17. Procédé selon l'une des revendications 1 à 16, **caractérisé en ce que** l'air extrait du bâtiment (5) est soumis à une purification à l'aide d'un bio-filtre (17).
